# EUROPEAN PATENT SPECIFICATION

(11) **EP 0 336 130 B1**
(45) Date of publication and mention of the grant of the patent: **07.01.1993**
(21) Application number: 89104034.7
(22) Date of filing: 07.03.1989
(51) Int. Cl.: G01B 11/02, G01B 11/26, F27D 3/00, C21D 9/00

(54) **Method and apparatus for the positioning of slabs**
Verfahren und Vorrichtung zur Positionierung von Eisenblöcken
Méthode et appareil pour positionner des plaques en acier

(30) Priority: 24.03.1988 IT 1244388
(43) Date of publication of application: 11.10.1989
(73) Proprietor: IRITECNA Società per l'Impiantistica Industriale e l'Assetto del Territorio per Azioni, I-16126 Genova (IT)
(72) Inventor: Meini, Bruno, I-16142 Genova (IT); Fabbrini, Alessandro, I-16164 Genova (IT); Scarsi, Giovanni, I-16133 Genova (IT)
(74) Representative: Porsia, Bruno

(56) References cited:
- PATENT ABSTRACTS OF JAPAN, vol. 11, no. 52 (P-548)[2499], 18th February 1987; & JP-A-61 219 807 (NEC CORP.) 30-09-1986
- PATENT ABSTRACTS OF JAPAN, vol. 11, no. 109 (P-564)[2556], 7th April 1987, page 137 P 564; & JP-A-61 259 108 (OYO KEISOKU KENKYUSHO K.K.) 17-11-1986
- PATENT ABSTRACTS OF JAPAN, vol. 5, no. 201 (P-94)[873], 19th December 1981, page 109 P 94; & JP-A-56 122 904 (TOKYO SHIBAURA DENKI K.K.) 26-09-1981
- PATENT ABSTRACTS OF JAPAN, vol. 8, no. 269 (P-319)[1706], 8th December 1984; & JP-A-59 136 606 (KAWASAKI JUKOGYO K.K.) 06-08-1984

## Description

This invention relates to a method for the positioning of slabs to be introduced into a furnace, particularly into a walking-beam furnace, with the aid of optical and electronic means. According to this method, at least one slab is fed along a virtual slab-feeding horizontal plane, orthogonally to the direction of entrance into, and advance through the furnace, in front of the furnace mouth, and in the position in which it will be introduced into the furnace. In the region opposite the furnace-mouth, the invention provides also an apparatus for carrying out this method, consisting of a horizontal path formed by powered rollers, or the like, for feeding the slabs in front of the furnace-mouth, orthogonally to the entrance direction into, and advance through the furnace, and consisting of a plurality of light sources which are directed onto the slabs in the region opposite the furnace-mouth, and of telecameras directed on the region opposite the furnace mouth and connected to display monitors, and of a microprocessor connected to the monitors.

Usually, the slabs are fed orthogonally to the direction of entrance into, and advance through the furnace, in front of the mouth of a furnace, particularly of a walking-beam furnace, and in the position in which they will be introduced into the furnace, with the aid of a roller-path, or the like, and the slabs are then introduced into the furnace by means of suitable furnace-feeding devices, in the same position as on the roller path. In order to avoid any accident while the slabs are getting through the furnace, the slabs have to be introduced into the furnace in the best possible correct position, i.e., with their longitudinal axes arranged perpendicular to the direction of movement through the furnace, which is generally parallel to the longitudinal axis of the furnace, and with their intermediate transverse axes arranged parallel to the longitudinal axis of the furnace, i.e., to the direction of entrance into, and advance through the furnace. Moreover, the slabs must be exactly centered with respect to the furnace-mouth. If it is a matter of short slabs which can be introduced two by two into the furnace, the longitudinal axes of these short slabs must coincide. Therefore, to introduce slabs into a furnace, a positioning device is required for controlling the roller-path so as to ensure a correct positioning of a slab relative to the furnace mouth.

In a known slab-positioning method, laser beams incident on the slab endwalls are used, and the reflected image of said beams is detected by optical and electronic means, for example, by telecameras associated with display monitors and with an electronic processor. According to this known method, in order to determine the correct slab-centered position relative to the furnace-mouth, the angle of the laser beam reflection on the end face of a slab is measured, which varies depending upon the different positions on the roller-path, the like. By this known method, the disadvantage is eliminated of the slabs slipping on the rollers, which is found in the methods used heretofore. However, since the end face of a slab, against which the laser beam is projected, often is considerably irregular, in this known method there is still the drawback that the laser beam may often impinge against ridges or valleys on or in the generally rough end face of a slab, thus causing a displacement in the actual position of the slab. Moreover, by this method it is not possible to determine any error in the orientation of a slab with respect to the direction of entrance into, and advance through the furnace.

The object of the present invention is to provide a slab-positioning method and apparatus of the type as disclosed at the outset, by which the aforementioned disadvantages will be eliminated, so that a correct and exact positioning of the slabs relative to the furnace-mouth is made possible, by using comparatively simple means of a low-cost construction.

The invention solves this problem by a method according to the second part of claim 1.

If it is the matter of two short slabs, that is, of two slabs whose length is at the most shorter than one-half of the width of the furnace-mouth, these short slabs are fed in pairs into the position in which they will be introduced into the furnace, according to what is contemplated in the characterizing part of the dependent claim 2.

By the method according to the invention, it is also possible to check and correct the inclination of the slabs with respect to the slab-feeding direction, according to the teaching of the dependent claim 5.

A particular embodiment of an apparatus according to the invention, for carrying the said method, is made according to the teaching of the dependent claim 9.

The invention thus affords the advantage of rendering an automatic, exact positioning of the slabs possible, independently from any slab distortion, not only in connection with the centering of the slabs in respect of the furnace-mouth, but also in connection with their orientation in respect of the direction of entrance into, and advance through the furnace, even in the case of two short slabs being simultaneously introduced into the furnace.

Other features further improving the slab-positioning method and apparatus as disclosed above, also form the object of the invention, and are the subject of the dependent claims.

The particular features of the invention, and the advantages arising therefrom, will appear more in detail from the description of one preferred embodiment thereof, which is shown by way of a non-limiting example in the accompanying drawings, in which:
Figure 1 is a side view of an apparatus according to the invention.
Figures 2 and 3 are two top views of the apparatus according to the invention, respectively with a long slab and two short slabs.
Figure 4 is a block diagram of the electronic circuit for the apparatus according to the invention.
Figures 5 and 6 show the images appearing on the monitor, which correspond to two different orientations of a slab.

In the apparatus described hereinbelow, it is assumed that the longitudinal axis of the furnace coincides with the direction of entrance into, and advance through the furnace.

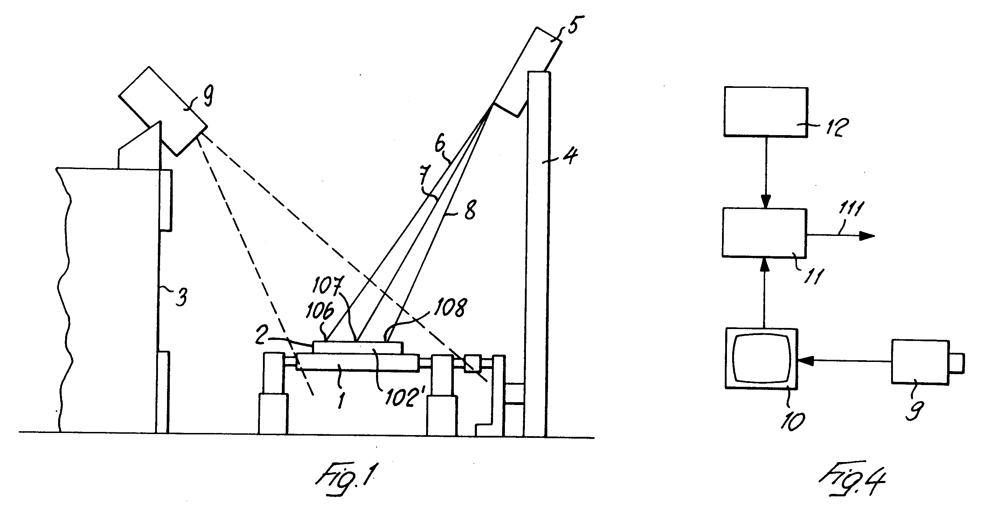

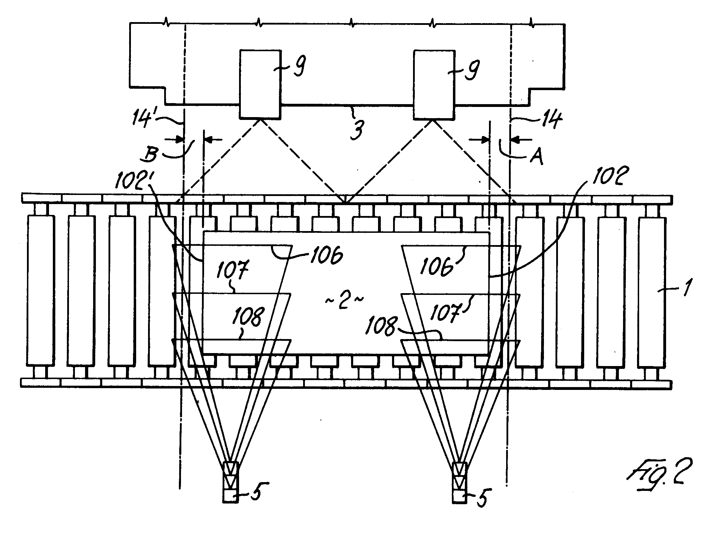

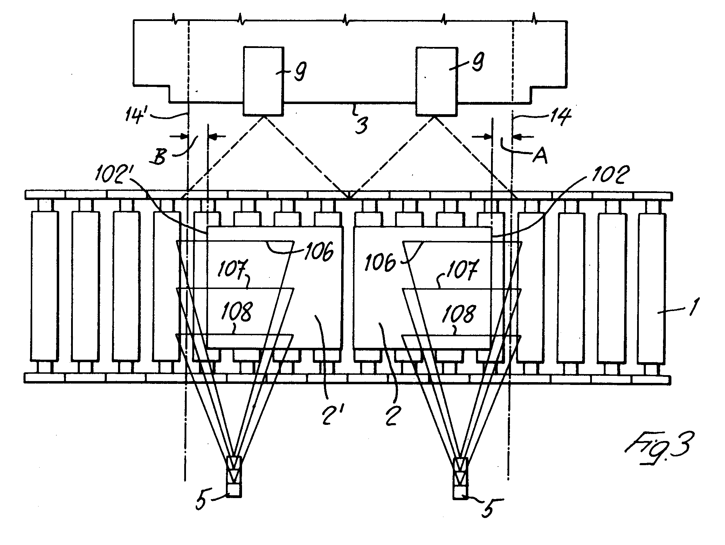

Figure 1 shows an apparatus according to the invention, comprising a powered roller path 1 for feeding the slabs 2, the said roller-path being arranged normally to the longitudinal axis of the furnace, in front of the furnace-mouth 3. On the side of the roller-path 2 that faces away from the furnace-mouth 3, an upright structure 4 fixedly supports two sources of light designated by the reference numeral 5, which are each arranged opposite a lateral region of the furnace-mouth 3, and are directed against a slab 2 disposed on the roller-path 1. The beams from the sources of light 5 are converted with the aid of suitable optical devices, into three beams of light 6, 7, 8, in form of thin planes, so-called blades of light, disposed on three planes which are inclined to the horizontal plane, are so inclined to each other that their mutual intersection point coincides with the light sources 5, while at least two or three parallel lines of light 106, 107, 108 are projected on the slab 2. The light sources 5, moreover, are oriented so that the lines of light 106, 107, 108 created on the slab are normal to the direction of entrance and advance into the furnace, while their edges are perfectly aligned on a straight line which is parallel to the longitudinal axis of the furnace. On the side of the roller-path away from the sources of light 5 and above the top side of the furnace-mouth, opposite each lateral region, there is arranged a telecamera 9. Each telecamera 9 is directed towards the roller-path 1. The total field of vision of said telecameras 9, preferably, covers the entire stretch of roller-path 1 that is in front of the furnace-mouth 3. This arrangement is clearly apparent also from Figs. 2 and 3.

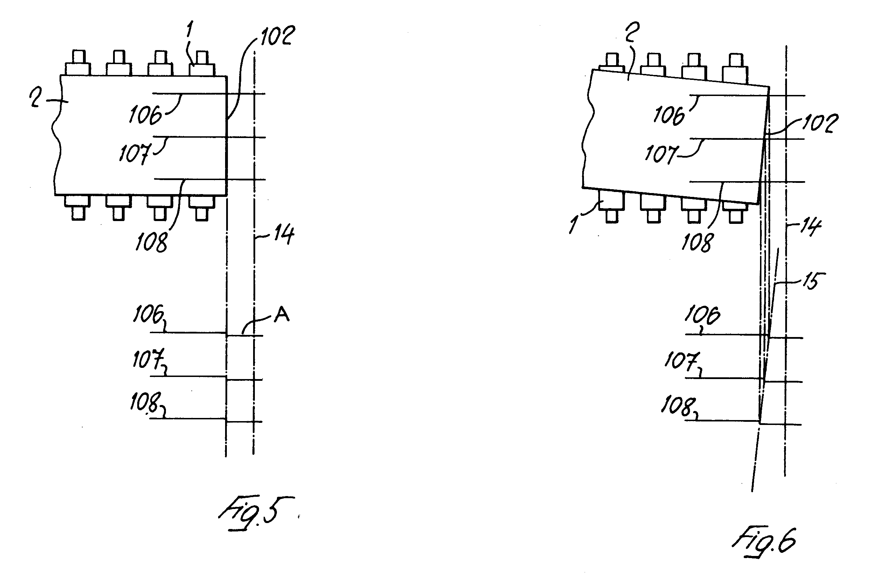

As clearly shown in Fig. 4, each telecamera 9 is connected first to a display monitor 10 which, in turn, is connected to a microprocessor 11. Said microprocessor, moreover, is connected to a programmable-logic control unit 12 which manages the handling of slabs. The microprocessor 11 has an outlet 111 to control the conveying speed of the powered roller-path 1.

The image which is projected onto the slabs 2 is picked up by the telecameras 9 and is displayed on the monitors 10. Fig. 5 shows the image which is obtained when a slab 2 is oriented correctly with respect to the longitudinal axis of the furnace. In this instance, the end face 102 of the slab is perfectly aligned with the longitudinal axis of the furnace. The monitor 10, therefore, will show the three lines of light 106, 107, 108 being projected on the slab as spaced by a vertical offset from three associated lines corresponding to three reference lines or projections of the blades of light 6, 7, 8 onto the rollers adjacent the end face 102. The spots of spacing or offset are disposed, in this instance, on a straight line which is parallel to the longitudinal axis of the furnace, while the length of the lines of light 106, 107, 108 from their ends on the slab to the spots of offset at the edge of the end face 102 is identical for all the lines.

By virtue of the pair of reference borders 14 and 14′ which, in this instance, are in register each with a sidewall of the furnace-mouth 3, on the basis of the length of these lines of light the distances A and B of the end faces 102 and 102′ of a slab from the respective sidewall of the furnace mouth 3 can be determined, and, therefore, the automatic centering of the slab 2 with respect to the furnace-mouth 3 can be effected, by suitably controlling the speed of the roller-path 1. The deceleration of the roller-path 1 is controlled by the microprocessor 11 connected to the monitor 10 depending upon the difference of said two distances A and B of the respective end faces 102 and 102′ of a slab 2 from the corresponding sidewalls of the furnace-mouth 3 registering with the reference border 14 and 14′ whereby the deceleration is continuous and the slab 2 is stopped only when the distance A is identical to the distance B, i.e. when their difference is zero. In this instance, it is to be noted that the microprocessor will not initiate the control operation until the end face 102′, that is the rear wall with respect to the feeding direction of the slab 2, has come into the reach of the blades of light 6, 7, 8, i.e. until it has overstepped the reference border 14′ associated therewith, since only in this circumstance a definite value greater than zero exists for the distance B and the difference between the two distances A and B can be determined.

Fig. 3 shows the apparatus according to the invention in case of two shorter slabs 2, 2′ to be introduced into the furnace simultaneously. In this instance, the distances A′ and B′ must be calculated previously, on the basis of the known lengths of the slabs 2, 2′. When the first slab, for example the slab 2, comes into the reach of the blades of light 6, 7, 8 in register with the sidewall of the furnace-mouth 3 associated therewith, the microprocessor commands the deceleration of the rollers, using as a reference parameter the difference between the measured value A and calculated value A′ transmitted automatically by the control unit 12 to the microprocessor 11 or entered manually by the operator, and stopping the slab 2 when the two values are identical, i.e. when their difference is zero. The deceleration and stoppage command for the second slab 2′ is initiated when the length of the lines 106, 107, 108 begins decreasing, since only then the slab 2′ has overstepped the reference border 14′ and its deceleration is similarly controlled depending upon the difference between the calculated distance and the measured distance, to come to a stop when such a difference is zero.

Finally, as shown in Fig. 6, the method according to the invention may be used as well to determine the orientation of a slab with respect to the longitudinal axis of the furnace. In the case of Fig. 6, we have shown the end face of a slab 2 the longitudinal axis of which is not perfectly normal to the longitudinal axis of the furnace. In this circumstance, the end face 102 of the slab 2 is also inclined with respect to the longitudinal axis of the furnace, whereby the lines of light 106, 107, 108 have different lengths and show offset sections on a straight line 15 which is similarly inclined with respect to the longitudinal axis of the furnace. Therefore, by virtue of the microprocessor 11 connected to the monitor 10, it is possible to determine the angle of inclination and control mechanical orientation means (not shown) and/or a warning device for the personnel intrusted with the manual correction.

The use of the monitors 10, and the fact that the total field of vision of the telecameras 9 covers the entire region in front of the furnace-mouth 3, enable additionally a direct visual check of said region by the personnel on duty.

In all the apparatuses according to the invention, the roller-path may be replaced with any other equivalent conveyor means.

## Claims

1. A method for the positioning of slabs to be introduced into a furnace, particularly into a walking-beam furnace, with the aid of optical means (5, 9, 10) and electronic means (11, 12), according to which method at least one slab (2) is fed along a virtual slab-feeding horizontal plane, orthogonally to the direction of entrance into, and advance through the furnace, in front of the furnace-mouth (3), and into the position in which it will be introduced into the furnace, characterized in that in front of each side edge of the furnace-mouth (3) at least two plane-like beams of light, i.e. light curtains (6, 7, 8), which are oriented in the feeding direction of the slab (2), and have a same origin, are projected on the said virtual slab-feeding plane (1), the said light curtains being angularly offset from each other around a horizontal axis coinciding with the said origin, or being parallel to each other, and the said light curtains producing on the said virtual slab-feeding plane (1), at the path of slab (2), two respective lines of light of a predetermined same length, which are directed parallel to each other and to the feeding direction of slab (2), with the distance of said lines of light from each other being shorter than the width of slab (2), and with their ends being mutually in line, orthogonally to the feeding direction of slab (2), the ends of said lines of light which are turned toward a virtual central vertical plane of the furnace-mouth (3) being at a sensible distance from this vertical plane, so that the actual value of the distance (A, B) between each end face (102, 102') of slab (2) and the respective side edge of the furnace-mouth (3) (the so-called measured distance) is measured and based on the length of the strokes of the lines of light (106, 107, 108), which are produced on the upper surface of slab (2) at its arrival in front of the furnace-mouth (3), the deceleration of slab (2) being commanded and based on the difference between the actual value of the distance (A) (measured distance) of the one end face (102) of slab (2) from the respective side edge of the furnace-mouth (3), and the actual value of the distance (B) (measured distance) of the other end face (102') of slab (2) from the respective side edge of the furnace-mouth, and the stopping of the slab being commanded when the said difference corresponds to a predetermined value, which is preferably equal to zero.

2. The method according to claim 1, characterized in that the slabs (2, 2') (the so-called short slabs), whose length is at the most shorter than one-half of the width of the furnace-mouth (3), are fed in pairs in front of the furnace-mouth (3), into the position in which they will be simultaneously introduced into the furnace, and are decelerated and stopped independently from each other, the deceleration of the first slab (2), by taking into account the feeding direction thereof, being commanded depending upon the difference between the measured distance (A) of its fore end face from the respective edge of the furnace-mouth (3), and the nominal value of the said distance (A) at the position in which the first slab (2) will be introduced into the furnace, which value is calculated and based on the known length of the two slabs (2, 2') and the known width of the furnace-mouth (3), the stopping of the said first slab (2) being commanded when the said difference corresponds to zero, while the deceleration of the second slab (2') is commanded depending upon the difference between the measured distance (B) of this second slab rear end face (102') from the respective side edge of the furnace-mouth (3), and the nominal value of said distance (B) which is calculated and based on the known length of slabs (2, 2') and the known width of the furnace-mouth (3), the stopping of the said second slab (2') being commanded when the said difference corresponds to zero, and the deceleration command for the said second slab (2') being emitted when the length of the strokes of the lines of light (106, 107, 108), which are produced on the second slab upper surface at its arrival in front of the furnace-mouth (3), diminishes as the second slab (2') is being gradually advanced to the position in which it will be introduced into the furnace.

3. The method according to claim 1 or claim 2, characterized in that on the virtual slab-feeding horizontal plane fixed, ideal reference lines (14, 14') are provided, which are orthogonal to the lines of light produced thereon, and define the width of the furnace-mouth (3) on the said virtual slab-feeding plane, and by the said fixed, ideal reference lines the actual value being measured of the distance (A, B) (measured distance) of each end face (102, 102') of slab (2) from the respective side edge of the furnace-mouth (3), by subtracting the length of the strokes of the lines of light (106, 107, 108), which are produced on the upper surface of slab (2) at its arrival in front of the furnace-mouth (3), from the length value of the lines of light produced on the virtual slab-feeding plane, between the intersection point with the respective ideal reference line (14, 14'), and the end of said line turned toward the virtual central vertical plane of the furnace-mouth (3).

4. The method according to claim 3, characterized in that the reference lines (14, 14') coincide with the side edges of the furnace-mouth (3).

5. The method according to any of the preceding claims, characterized in that the inclination of slab (2) relative to the direction of entrance into, and advance through the furnace, is indicated by the strokes of the lines of light (106, 107, 108), which are produced on the slab, and are of different lengths, the intersection points of the strokes of the lines of light (106, 107, 108) with the upper edges of the slab end faces (102, 102') being disposed on a straight line (15) having the same inclination as the slab end faces (102, 102'), relative to the direction of entrance into, and advance through the furnace, while the ends of said strokes of the lines of light (106, 107, 108), on the upper surface of slab (2), which are turned toward the virtual central vertical plane of the furnace-mouth (3), are in-line with each other always on a straight line which is parallel to the direction of entrance into, and advance through the furnace, so that the inclination of slab (2) is determined by mutually comparing the lengths of the individual strokes of the lines of light (106, 107, 108), which are produced on the upper surface of at least one end of slab (2), orienting means being provided for angularly shifting a slab (2) in the virtual slab-feeding plane (1), and being actuated when from the said comparison it appears that the said strokes of the lines of light (106, 107, 108) are of a length which is different for each one of them.

6. The method according to claim 5, characterized in that the means for orienting the slabs (2) relative to the direction of entrance into, and advance through the furnace, consists of an automatic device which is controlled either by a microprocessor (11) or manually.

7. An apparatus for carrying out the method according to any of the preceding claims, which is provided with a horizontal path formed by powered rollers (1), or the like, for feeding slabs (2) to the furnace-mouth (3), the said roller-path (1) being arranged orthogonally to the direction of entrance into, and advance through the furnace, and which is provided in the region opposite the furnace-mouth (3), with a plurality of light sources (5) that are directed to the slabs (2, 2'), and is provided with telecameras (9) that are directed on the region opposite the furnace-mouth (3) and are connected to display monitors (10), and also with a microprocessor (11) connected to the monitors (10), characterized in that this apparatus is fitted with at least two light sources (5), which are arranged on that side of the roller-path (1) which is opposite to the furnace-mouth (3), respectively in front of one side edge of the furnace-mouth (3), each of the said light sources projecting on the roller-path (1) at least two light curtains (6, 7, 8), which are oriented in the feeding direction of slabs (2, 2'), and this apparatus is also fitted with at least two telecameras (9) that are directed on the roller-path (1), and are disposed over the furnace-mouth (3), the said telecameras being each associated with one of the sides of the furnace-mouth (3), and being each connected to one display monitor (10), and the microprocessor (11) being connected both to the monitors (10) and to an electronic, programmable-logic control device (12) for the generation of control signals to the roller-path (1).

8. The apparatus according to claim 7, characterized in that the light sources consist of light sources (5) fitted with additional optical devices for producing light curtains (6, 7, 8).

9. The apparatus according to claim 7 or claim 8, characterized in that the total field of vision of the two telecameras (9) comprises the entire region opposite the furnace-mouth (3).

## Patentansprüche

1. Verfahren zum Positionieren von Eisenblöcken, die in einen Ofen, insbesondere in einen Hubbalkenofen einzubringen sind, mit Hilfe optischer Mittel (5, 9, 10) und elektronischer Mittel (11, 12), nach welchem Verfahren mindestens ein Eisenblock (2) entlang einer virtuellen horizontalen Eisenblockvorschubebene, die orthogonal zur Eintritts- und Durchlauföffnung durch den Ofen, vor dem Ofenmaul (3) liegt und in eine Position vorgeschoben wird, in der er in den Ofen eingebracht wird, **dadurch gekennzeichnet,** daß in Front von jeder Seitenkante des Ofenmaules (3) mindestens zwei ebenenähnliche Lichtbalken, d. h. Lichtvorhänge (6, 7, 8), die in Vorschubrichtung des Eisenblockes (2) orientiert sind und die gleiche Ursprungsquelle haben, auf die genannte virtuelle Eisenblockvorschubebene (1) projiziert werden, welche Lichtvorhänge winkelmäßig voneinander um eine horizontale Achse versetzt sind, die mit der genannten Ursprungsquelle zusammenfällt, oder die parallel zueinander liegen, wobei die genannten Lichtvorhänge auf der genannten virtuellen Eisenblockvorschubebene (1) an der Wegbahn der Eisenblöcke (2) jeweils zwei Lichtlinien einer vorbestimmten gleichen Länge bilden, die parallel zueinander und zur Vorschubrichtung des Eisenblockes (2) gerichtet sind, wobei der Abstand der genannten Lichtlinien voneinander kürzer ist als die Breite des Eisenblockes (2) und die mit ihren Enden gegenseitig, orthogonal zur Vorschubrichtung der Eisenblöcke (2) in einer Linie liegen, wobei die Enden der genannten Lichtlinien, die einer virtuellen zentralen Vertikalebene des Ofenmaules (3) zugewandt liegen, sich in einem genauen Abstand von dieser Vertikalebene befinden, so daß der aktuelle Wert des Abstandes (A, B) zwischen jeder Endfläche (100, 102') des Eisenblockes (2) und der jeweiligen Seitenkante des Ofenmaules (3) (der sogenannte gemessene Abstand) gemessen wird und auf die Länge der Lichtlinienstriche (106, 107, 108) basiert wird, die auf der Oberfläche des Eisenblockes (2) bei seiner Ankunft vor dem Ofenmaul (3) gebildet werden und dann die Verlangsamung des Eisenblockes (2) gesteuert und auf der Differenz basiert wird, die zwischen dem aktuellen Wert des Abstandes (A) (gemessener Abstand) der einen Endfläche (102) des Eisenblockes (2) von der entsprechenden Seitenkante des Ofenmaules (3) und dem aktuellen Wert des Abstandes (B) (gemessener Abstand) der anderen Endfläche (102') des Eisenblockes (2) von der entsprechenden Seitenkante des Ofenmaules besteht und ferner das Stoppen des Eisenblockes gesteuert, wird, wenn die genannte Differenz einem vorbestimmten Wert, der vorzugsweise gleich Null ist, entspricht.

2. Verfahren nach Anspruch 1, dadurch gekennzeichnet, daß die Eisenblöcke (2, 2') (die sogenannten kurzen Eisenblöcke), deren Länge in jedem Fall kürzer ist als die Hälfte der Breite des Ofenmaules (3) paarweise vor das Ofenmaul (3) vorgeschoben werden, in eine Position, in der sie simultan in den Ofen eingebracht werden und die unabhängig voneinander verlangsamt und gestoppt werden, wobei die Verlangsamung des ersten Eisenblockes (2) unter Berücksichtigung seiner Vorschubrichtung abhängig von der Differenz zwischen dem gemessenen Abstand (A) zwischen seinem vorlaufenden Ende zu der jeweiligen Kante des Ofenmaules (3) und dem Nominalwert des genannten Abstandes (A) in einer Position, in der der erste Eisenblock (2) in den Ofen eingebracht wird, gesteuert wird, welch letzterer Wert berechnet und aus der bekannten Länge der beiden Eisenblöcke (2, 2') und der bekannten Breite des Ofenmaules (3) basiert wird und wobei ferner das Stoppen des genannten ersten Eisenblockes (2) gesteuert wird, wenn die genannte Differenz Null entspricht, während die Verlangsamung des zweiten Eisenblockes (2) in Abhängigkeit der Differenz zwischen dem gemessenen Abstand (B) der rückwärtigen Endfläche des zweiten Eisenblockes (102) von der jeweiligen Seitenkante des Ofenmaules (3) und dem Nominalwert des genannten Abstandes (B), gesteuert wird, welch letzterer berechnet und basiert auf die bekannte Länge der Eisenblöcke (2, 2') und die bekannte Breite des Ofenmaules (3) wird, wobei das Stoppen des genannten zweiten Eisenblockes (2') gesteuert wird, wenn die genannte Differenz Null entspricht und wobei die Verlangsamungssteuerung für den zweiten Eisenblock (2') ausgelöst wird, wenn die Länge der Lichtlinienstriche (106, 107, 108), die auf der Oberfläche des zweiten Eisenblockes bei seiner Ankunft vor dem Ofenmaul (3) gebildet werden, sich verringert, wenn der zweite Eisenblock (2') graduell in die Position vorbewegt wird, in der er in den Ofen eingebracht wird.

3. Verfahren nach Anspruch 1 oder 2, dadurch gekennzeichnet, daß auf der virtuellen horizontalen Eisenblockvorschubebene ortsfeste, ideelle Bezugslinien (14, 14') vorgesehen werden, die orthogonal zu den darauf gebildeten Lichtlinien liegen und die die Breite des Ofenmaules (3) auf der genannten virtuellen Eisenblockvorschubebene definieren und durch die genannten ortsfesten ideellen Bezugslinien der aktuelle Wert des Abstandes (A, B) (gemessener Abstand) zwischen jeder Endfläche (102, 102') des Eisenblockes (2) von der jeweiligen Endkante des Ofenmaules (3) gemessen wird, indem die Länge der Lichtlinienstriche (106, 107, 108), die auf der Oberfläche des Eisenblockes (2) bei seiner Ankunft vor dem Ofenmaul (3) gebildet werden, von dem Längenwert der Lichtlinien, die auf der virtuellen Eisenblockförderlinie gebildet werden, zwischen dem Schnittpunkt mit der jeweiligen ideellen Bezugslinie (14, 14') und dem Ende der genannten Linie, zugewandt der virtuellen zentralen Vertikalebene des Ofenmaules (3), abgezogen wird.

4. Verfahren nach Anspruch 3, dadurch gekennzeichnet, daß die Referenzlinien (14, 14') mit den Seitenkanten des Ofenmaules (3) zusammenfallen.

5. Verfahren nach einem der vorhergehenden Ansprüche, dadurch gekennzeichnet, daß die Neigungslage des Eisenblockes (2) relativ zur Eintritts- und Durchlaufrichtung im Ofen durch die Lichtlinienstriche (106, 107, 108) angezeigt wird, die auf dem Eisenblock gebildet werden und die unterschiedliche Längen haben, wobei die Schnittpunkte der Lichtlinienstriche (106, 107, 108) mit den oberen Kanten der Eisenblockendflächen (102, 102') in einer geraden Linie (15) liegen, die die gleiche Neigung wie die Eisenblockendflächen (102, 102') relativ zur Eintrittsund Durchlaufrichtung in den Ofen haben, während die Enden der genannten Lichtlinienstriche (106, 107, 108) auf der Oberfläche des Eisenblockes (2), die der virtuellen zentralen Vertikalebene des Ofenmaules (3) zugewandt liegen, in Linie miteinander immer in einer geraden Linie liegen, die parallel zur Eintritts- und Durchlaufrichtung durch den Ofen liegt, so daß die Neigungslage des Eisenblockes (2) durch gegenseitiges Vergleichen der Längen der individuellen Lichtlinienstriche (106, 107, 108) bestimmt wird, die auf der Oberfläche auf mindestens einem Ende des Eisenblockes (2) gebildet werden, wobei Ausrichtmittel für eine Winkellagenveränderung eines Eisenblockes (2) in der virtuellen Eisenblockvorschubebene (2) vorgesehen sind, die betätigt werden, wenn der genannte Vergleich ergibt, daß die genannten Lichtlinienstriche (106, 107, 108) eine Länge haben, die für jeden von ihnen unterschiedlich ist.

6. Verfahren nach Anspruch 5, dadurch gekennzeichnet, daß die Ausrichtmittel zum Ausrichten der Eisenblöcke (2) relativ zur Eintritts- und Durchlaufrichtung durch den Ofen aus einer automatisch arbeitenden Vorrichtung bestehen, die entweder durch einen Mikroprozessor (11) oder von Hand gesteuert wird.

7. Vorrichtung zur Druchführung des Verfahrens nach einem der vorhergehenden Ansprüche, die mit einer horizontalen Wegbahn, gebildet durch angetriebene Rollen (1) oder dergleichen, für den Vorschub der Eisenblöcke (2) in das Ofenmaul (3) versehen ist, wobei die genannte Rollenbahn (1) orthogonal zur Richtung des Eintrittes in und des Durchlaufes durch den Ofen angeordnet ist und die im Bereich gegenüberliegend dem Ofenmaul (3) mit einer Mehrzahl von Lichtquellen (5) versehen ist, die auf die Eisenblöcke (2, 2') gerichtet sind und die mit Telekameras (9) versehen ist, die auf den Bereich gegenüberliegend dem Ofenmaul (3) gerichtet sind und die mit Displaymonitoren (10) verbunden sind und ferner mit einem Mikroprozessor (11), der mit den Monitoren (10) versehen ist, dadurch gekennzeichnet, daß diese Vorrichtung mit mindestens zwei Lichtquellen (5) ausgestattet ist, auf der dem Ofenmaul (3) gegenüberliegenden Seite der Rollenbahn (1) jeweils vor einer Seitenkante des Ofenmaules (3) angeordnet sind, wobei jede der genannten Lichtquellen auf die Rollenbahn (1) mindestens zwei Lichtvorhänge (6, 7, 8) projiziert, die in Vorschubrichtung der Eisenblöcke (2, 2') orientiert sind und die Vorrichtung ferner mit mindestens zwei Telekameras (9) ausgerüstet ist, die auf die Rollenbahn (1) gerichtet sind und die über dem Ofenmaul (3) angeordnet sind, wobei die genannten Telekameras jede einer der Seiten des Ofenmaules (3) zugeordnet sind und jede mit einem Displaymonitor (10) verbunden ist und dem Mikroprozessor (11) mit beiden Monitoren (10) und mit einer elektronischen, programmierbaren logischen Steuervorrichtung (12) für die Erzeugung von Steuersignalen zur Rollenbahn (1) verbunden sind.

8. Vorrichtung nach Anspruch 7, dadurch gekennzeichnet, daß die Lichtquellen aus Lichtquellen (5) bestehen, die mit zusätzlichen optischen Vorrichtungen zum Produzieren von Lichtvorhängen (6, 7, 8) ausgerüstet sind.

9. Vorrichtung nach Anspruch 7 oder 8, dadurch gekennzeichnet, daß das gesamte Sichtfeld der beiden Telekameras (9) den gesamten Bereich gegenüberliegend dem Ofenmaul (3) beinhaltet.

## Revendications

1. Procédé de mise en position de brames destinées à être introduites dans un four, en particulier dans un four à sole oscillante, à l'aide de moyens optiques (5, 9, 10) et de moyens électroniques (11, 12), procédé suivant lequel on charge au moins une brame (2) le long d'un plan horizontal virtuel de chargement de brames, orthogonalement à la direction d'entrée et d'avance dans le four en face de l'embouchure (3) du four et dans la position dans laquelle elle sera introduite dans le four, caractérisé en ce qu'en face de chaque bord latéral de l'embouchure (3) du four, on projette au moins deux faisceaux lumineux plans, c'est-à-dire deux rideaux de lumière (6, 7, 8), qui sont orientés dans la direction de chargement de la brame (2) et qui ont la même origine, sur le plan (1) virtuel de chargement de la brame, les rideaux de lumière étant décalés angulairement l'un par rapport à l'autre autour d'un axe horizontal coïncidant avec l'origine ou étant parallèles l'un à l'autre, et les rideaux de lumière produisant sur le plan (1) virtuel de chargement de brames, sur le trajet de la brame (2), deux lignes respectives de lumière d'une même longueur prescrite qui sont dirigées parallèlement l'une à l'autre et à la direction de chargement de la brame (2), la distance entre les lignes de lumière étant plus petite que la largeur d'une brame (2) et leurs extrémités étant mutuellement alignées orthogonalement à la direction de chargement d'une brame (2), les extrémités des lignes de lumière, qui sont tournées vers un plan vertical virtuel central de l'embouchure (3) du four étant à une certaine distance de ce plan vertical, de manière que la valeur réelle de la distance (A, B) entre chaque face d'extrémité (102, 102') d'une brame (2) et le bord latéral respectif de l'embouchure (3) du four (ce que l'on appelle la distance mesurée), soit mesurée et soit basée sur la longueur des traits de lignes de lumière (106, 107, 108), qui sont produits sur la face supérieure d'une Drame (2) à son arrivée en face de l'embouchure (3) du four, la décélération d'une Drame (2) étant commandée et étant basée sur la différence entre la valeur actuelle de la distance (A) (distance mesurée) de l'une des faces d'extrémité (102) d'une brame (2) au bord latéral respectif de l'embouchure (3) du four et la valeur actuelle de la distance B (distance mesurée) de l'autre face d'extrémité (102') d'une Drame (2) au bord latéral respectif de l'embouchure du four et l'arrêt de la brame étant commandé quand cette différence correspond à une valeur prescrite qui, de préférence, est égale à zéro.

2. Procédé suivant la revendication 1, caractérisé en ce que les brames (2, 2') (dénommées brames courtes), dont la longueur est au plus plus courte que la moitié de la largeur de l'embouchure (3) du four, sont chargées par paires en face de l'embouchure (3) du four dans la position dans laquelle elles seront introduites simultanément dans le four et sont décélérées et stoppées, indépendamment l'une de l'autre, la décélération de la première brame (2) en prenant en compte sa direction de chargement, étant commandée en fonction de la différence entre la distance mesurée (A) de sa face d'extrémité avant au bord respectif de l'embouchure (3) du four et la valeur nominale de la distance (A) en la position dans laquelle la première brame (2) sera introduite dans le four, cette valeur étant calculée et basée sur la longueur connue des deux brames (2, 2') et sur la largeur connue de l'embouchure (3) du four, l'arrêt de la première brame (2) étant commandé quand cette différence correspond à zéro, tandis que la décélération de la seconde brame (2') est commandée en fonction de la différence entre la distance mesurée (B) de la face d'extrémité arrière (102') de cette seconde brame au bord latéral respectif de l'embouchure (3) du four et la valeur nominale de la distance (B), qui est calculée et basée sur la longueur connue des brames (2, 2') et sur la largeur connue de l'embouchure (3) du four, l'arrêt de la seconde brame (2') étant commandé quand cette différence correspond à zéro et la commande de décélération de la seconde brame (2') étant émise quand la longueur des traits des lignes de lumière (106, 107, 108), qui sont produits sur la face supérieure de la seconde brame, à son arrivée en face de l'embouchure (3) du four, diminue au fur et à mesure que la seconde brame (2') avance progressivement à la position dans laquelle elle sera introduite dans le four.

3. Procédé suivant la revendication 1 ou 2, caractérisé en ce qu'il est prévu, sur le plan horizontal virtuel de chargement de brames, des lignes de référence (14, 14') idéales fixes, qui sont orthogonales aux lignes de lumière qui y sont produites et qui définissent la largeur de l'embouchure (3) du four sur le plan virtuel de chargement de brames et, par ces lignes de référence idéales (6), on mesure la valeur réelle de la distance (A, B) (distance mesurée) de chaque face d'extrémité (102, 102') d'une brame (2) au bord latéral respectif de l'embouchure (3) du four en soustrayant la longueur des traits des lignes de lumière (106, 107, 108) qui sont produits sur la face supérieure d'une brame (2) à son arrivée en face de l'embouchure (3) du four, de la longueur des lignes de lumière produites sur le plan virtuel de chargement de brames entre le point d'intersection avec la ligne de référence (14, 14') idéale respective, et l'extrémité de cette ligne tournée vers le plan vertical virtuel central de l'embouchure (3) du four.

4. Procédé suivant la revendication 3, caractérisé en ce que les lignes de référence (14, 14') coïncident avec les bords latéraux de l'embouchure (3) du four.

5. Procédé suivant l'une quelconque des revendications précédentes, caractérisé en ce que l'inclinaison d'une brame (2), par rapport à sa direction d'entrée et d'avance dans le four, est indiquée par les traits des lignes de lumière (106, 107, 108) qui sont produits sur la brame et sont de longueur différente, les points d'intersection des traits des lignes de lumière (106, 107, 108) avec les bords supérieurs des faces d'extrémité (102, 102') d'une brame étant disposés sur une ligne droite (15) ayant la même inclinaison que les faces d'extrémité (102, 102') d'une brame, par rapport à la direction d'entrée et d'avance dans le four, tandis que les extrémités des traits des lignes de lumière (106, 107, 108) sur la face supérieure d'une brame (2), qui sont tournées vers le plan vertical virtuel central de l'embouchure (3) du four, sont toujours alignées l'une sur l'autre, suivant une ligne droite qui est parallèle à la direction d'entrée et d'avance dans le four, de sorte que l'inclinaison d'une brame (2) est déterminée en comparant mutuellement les longueurs des traits individuels des lignes de lumière (106, 107, 108) qui sont produits sur la face supérieure d'au moins une extrémité d'une brame (2), des moyens d'orientation étant prévus pour décaler angulairement une brame (2) dans le plan virtuel (1) de chargement des brames et étant actionnés quand il apparait de cette comparaison que les traits des lignes de lumière (106, 107, 108) ont une longueur qui diffère de l'un à l'autre.

6. Procédé suivant la revendication 5, caractérisé en ce que les moyens pour orienter les brames (2), par rapport à la direction d'entrée et d'avance dans le four, consistent en un dispositif automatique qui est commandé par un microprocesseur (11) ou manuellement.

7. Dispositif pour effectuer le procédé suivant l'une quelconque des revendications précédentes, qui est muni d'une voie horizontale formée de rouleaux d'entraînement (1) ou analogues, pour charger des brames (2) dans l'embouchure (3) du four, la voie à rouleaux (1) étant disposée orthogonalement à la direction d'entrée et d'avance dans le four, et qui est muni, dans la région opposée à l'embouchure (3) du four, d'une pluralité de sources lumineuses (5) qui sont dirigées sur les brames (2, 2') et qui est muni de caméras de télévision (9) qui sont dirigées sur la région opposée à l'embouchure (3) du four et qui sont reliées à des moniteurs (10) d'affichage et également à un microprocesseur (11) relié au moniteur (10), caractérisé en ce que ce dispositif est muni d'au moins deux sources lumineuses (5) qui sont dirigées du côté le la voie à rouleaux (1) qui est opposée à l'embouchure (3) du four, respectivement en face d'un bord latéral de l'embouchure (3) du four, chacune de ces sources lumineuses projetant, sur la voie à rouleaux (1), au moins deux rideaux lumineux (6, 7, 8), qui sont orientés dans la direction de chargement des brames (2, 2') et ce dispositif est également muni d'au moins deux caméras de télévision (9) qui sont dirigées sur la voie à rouleaux (1) et qui sont disposées au-dessus de l'embouchure (3) du four, ces caméras de télévision étant chacune associée à l'un des bords de l'embouchure (3) du four et étant reliées, chacune, à un moniteur (10) d'affichage, et le microprocesseur (11) étant relié, à la fois, au moniteur (10) et à un dispositif (12) électronique de commande logique programmable destiné à engendrer des signaux de commande pour la voie à rouleaux (1).

8. Dispositif suivant la revendication 7, caractérisé en ce que les sources lumineuses consistent en sources lumineuses (5) munies de dispositifs optiques supplémentaires, pour produire des rideaux lumineux (6, 7, 8).

9. Dispositif suivant la revendication 7 ou 8, caractérisé en ce que le champ total de vision des deux caméras de télévision (9) comprend toute la région opposée à l'embouchure (3) du four.
